# EUROPÄISCHE PATENTANMELDUNG

(11) **EP 1 245 760 A2**
(43) Veröffentlichungstag der Anmeldung: **02.10.2002**
(21) Anmeldenummer: 02002005.3
(22) Anmeldetag: 05.02.2002
(51) Int. Cl.: E04H 15/20

(54) **Aufblasbarer Verbindungsgang**

(30) Priorität: 05.02.2001 AT 1792002
(71) Anmelder: Zimmermann, Andreas, 81476 München (DE)
(72) Erfinder: Zimmermann, Andreas, 81476 München (DE)

(57) **Zusammenfassung**

Die Erfinung betrifft einen aufblasbaren, geschlossenen begehbarer Verbindungsgang. Um zu erreichen, daß er sich in seiner Länge verändern läßt und sich von einem Ort aus aus einer eingefahrenen Stellung längs eines in Quer- und in Höhenrichtung nicht geraden Weges mit einfachen Mitteln in eine ausgefahrene Stellung ausfahren läßt, ist dieser aus miteinander verbundenen aufblasbaren Segmenten aufgebaut. Die Segmente weisen wenigsten einen rippenförmigen, die Querschnittsform bestimmenden formstabilen Querschnittsrahmen mit einer Durchgangsöffnung auf. Jeder Querschnittsrahmen ist auf der einen Seite mit einem umlaufenden geschlossenen gesteuert aufblasbaren äußeren Druckluftschlauch verbunden, Ferner sind mit jedem Querschnittsrahmen auf der einen Seite innerhalb des äußeren Druckluftschlauchs wenigstens drei sich in Segmentlängsrichtung erstreckende, einzeln gesteuert aufblasbare und dabei in ihrer Längserstreckung veränderbare innere Druckluftschläuche verbunden. Mehrere Segmente sind zum Verbindungsgang miteinander verbunden, wobei jeweils der äußere Druckluftschlauch und die inneren Druckluftschläuche mit dem Querschnittsrahmen des benachbarten Segments verbunden werden. Der Querschnittsrahmen kann die Form eines gleichschenkeligen Dreiecks mit einer sechseckige Durchgangsöffnung mit abgerundeten Ecken aufweisen.

## Beschreibung

Die Erfindung bezieht sich auf einen geschlossenen aufblasbaren Verbindungsgang, dessen Erstreckung bzw. -Ausdehnung in seiner Längsrichtung und dessen Querlauf In vertikaler und horizontaler Richtung gesteuert verändert werden kann.

Bekannt sind offene, z.T. auch geschlossene, Gangbrücken an Schiffsanlegestellan für die Verbindung zwischen Kaimauer und Schiff und geschlossene Gangbrücken an Flughäfen zwischen Terminalgebäude und Flugzeug, sogenannte "Rüssel", über die Passagiere elnund aussteigen. Sie bestehen meist aus mehreren Segmenten, die teleskopartig miteinander verbunden sind und deren Länge veränderbar ist. Sie sind meist am einen Ende an der Kaimauer oder am Terminal verankerbar. Das andere, freie Ende einer Gangbrücke ruht auf dem Schiff und kann dessen Auf- und Abbewegungen folgen, weil es auf der Kaimauer ruht oder dort universalgelenkartig verankert ist. Gleiches gilt für Passagler-Rüssel an Flughäfen, die am einen Ende gelenkig mit dem Terminalgebäude verbunden sind und am anderen Ende auf einem Fahrfußgestell ruhen, dessen vertikale Längserstreckung entsprechend der Höhe der Einstiegsluke des Flugzeugs gesteuert angepasst werden kann und dessen Längseretreckung dem Abstand der Einstiegsluke vom Terminal gesteuert angepasst wird. Am Ende dieses Verbindungsgangs bzw. Rüssels ist meist ein begehbarer Faltenbalg von 1 bis 2 m Länge zur Anpassung an die Flugzeugrumpfkontur vorgesehen, dessen Länge und Richtung ebenfalls veränderbar sind. Diese längenveränderbaren Verbindungsgänge lassen sich nicht stark verkürzen und ihr Verlauf in horizontaler und vertikaler Querrichtung nicht über ihre Länge verändern.

Es sind auch aufblasbare Gangbrücken bekannt. Eine solche Gangbrücke (WO 93/21389 A1), die insbesondere als Notrutsche zum Verlassen von Flugzeugen dienen kann, besteht aus einem Laufsteg und einem Gangdach. Der Laufsteg ist durch eine Reihe paralleler aufblasbarer langer Druckluftschläuche gebildet, die zu einem tragfähigen Verband aus über- und nebeneinander angeordneten Schläuchen miteinander verbunden und mit einer Laufplane abgedeckt sind. Das im Querschnitt etwa halbkreisförmige Gangdach ist eine Kunststoffplane, die querverlaufende aufblasbare Spanten bildende Druckluftschläuche aufweist, die dem Dach im aufgeblasenen Zustand Form und Stabilität verleihen. Eine gesteuerte Veränderung der Länge und des Verlaufs der Längsachse der Gangbrücke oder Rutsche ist nicht vorgesehen und nicht möglich.

Es ist femer eine ähnliche, einfacher aufgebaute Brücke bekannt (GB 2 310 237 A), bei der der Laufsteg durch mindestens zwei parallele Druckluftschläuche längs der Außenränder gebildet ist, zwischen denen eine feste, begehbare Laufplane gespannt ist, die mittels Querstreben und Längsschläuche, in die Verstärkungsstangen eingeschoben werden, so ausgesteift ist, dass sich ein belastbarer Laufsteg ergibt. Zusätzlich kann ein aufblasbares, im Querschnitt etwa halbkreisförmiges Dach vorgesehen sein. Nach Ablassen der Luft und Herausziehen der Verstärkungsstangen aus den Schläuchen kann die Gangbrücke zusammengerollt werden. Auch hier ist eine gesteuerte Veränderung der Länge und des Verlaufs der Längsachse der Gangbrücke oder Rutsche nicht vorgesehen und nicht möglich.

Der Erfindung liegt die Aufgabe zugrunde, einen geschlossenen Verbindungsgang, insbesondere für Personen, zu schaffen, dessen Länge variabel ist und dessen Verlauf in horizontaler und vertikaler Querrichtung frei einstellbar ist und der unabhängig von der gegenseitigen Lage der zu verbindenden Punkte, des Geländes oder Untergrundes und der Topographie zwischen den beiden Verbindungspunkten aus einer eingefahrenen Stellung in eine ausgefahrene Stellung mit einfachen Mitteln verbracht werden kann.

Ein diese Aufgabe lösender aufblasbarer und pneumatisch bewegbarer Verbindungsgang für Personen ist zusammen mit vorteilhaften Ausgestaltungen in den Patentansprüchen gekennzeichnet.

Zum Ausfahren des Gangs werden im Regelfall zunächst die äußeren Druckluftschläuche mit Druckluft gefüllt. Die inneren Druckluftschläuche werden mit Überdruck oder mit Unterdruck beaufschlagt bzw. wird aus ihnen die Luft evakuiert. Sie können auf diese Weise unterschiedlich (oder gleichzeitig) gestreckt oder verkürzt werden. Der Gang kann dadurch nahezu jeden beliebigen Querausrichtungsverlauf annehmen und kann ohne Einschränkung für den Benutzer gegenüber seiner Maximallänge bis ca. 30% verkürzt oder weniger ausgefahren werden. Hierfür sind pneumatische Steuerelemente vorgesehen, die die Luftzuoder -abfuhr der inneren Druckluftschläuche steuern. Die Steuerung von geometrischer Gestalt und Form erfolgt durch das Zusammenwirken von äußeren Druckluftschläuchen und inneren Druckluftschläuchen. Der äußere Druckluftschlauch trennt den Außenraum vom Innenraum.

Eine weitere Möglichkeit ist, die inneren Druckluftschläuche mit Hochdruck zu befüllen und aus den äußeren Druckluftschläuchen die Luft zu evakuieren.

Die inneren Druckluftschläuche bilden zusammen mit dem äußeren Druckluftschlauch je Segment eine Steuerungseinheit, die sich in ihrer Wirkung gegenseitig beeinflussen, und zwar in der Art, dass die Kombination der Druckbeaufschlagung der einzelnen Segmente einen von vornherein bestimmbaren Weg beschreiben. Während des Entfaltungsvorganges klappen sich Bodenplatten im Inneren der Konstruktion auf, die, nachdem sich der Schlauch in seiner Endlage befindet, als durchgehender Laufboden oder-steg benutzbar ist.

Der begehbare Verbindungsgang besteht aus mehreren gleichen Segmenten. Die Segmente bestehen aus jeweils mindestens einem Querschnittsrahmen, Z.B. in Form einer Aluminium- oder Glasfaserrippe, Höhe ca. 4,9m x Breite ca. 5,1 m x Tiefe ca. 0,1 m, Durchgangsöffnung ca. 2,6m maximale Höhe und 1,5m minimale Brelte, drei miteinander verbundenen äußeren Druckluftschläuchen (Ringpneus), Querschnitt jeweils ca. 0,5m x 0,5, und drei axial verlaufenden, mit dem rippenförmlgen Querschnittsrahmen verbundenen inneren Druckluftschläuchen, Durchmesser jeweils ca. 0,7m Länge ca. 1,5m.

Die inneren Druckluftschläuche werden mit einem gegenüber den äußeren Druckluftschläuchen geringeren Druck oder gar mit einem Unterdruck beaufschlagt. Die Pneus bestehen aus Kunststofffollen oder beschichteten Geweben und werden an den Rippen durch aufgeschraubte oder aufgenietete Aluminiumbänder befestigt. Die Pneus sind mit Druckleitungen und elektrisch steuerbaren Ventilen an mindestens einen Kompressor/Vakuumpumpe einer Versorgungseinheit gekoppelt. Die Versorgungseinheit kann über einen Steuerrechner derart mit Daten versorgt werden, dass die inneren Druckluftschläuche unabhängig voneinander mit Über- oder Unterdruck beaufschlagt werden, um der Längsform des Segment eine gewünschte Gestalt zu geben. Die Versorgungseinheit ist Im Gang oder in den Segmenten integriert oder extern, nur Ober Druckleitungen mit den inneren und äußeren Druckluftschläuchen verbunden. Der Verbindungsgang kann aus bellebig vielen Segmenten zusammengestellt werden. Im Betrieb wird der Gang nur durch unterschiedliche Luftdrücke in den inneren Druckluftschläuchen in elne bestimmte Form oder Gestalt gebracht, um seine Funktion als Verbindungsgang oder Versorgungsleitung zu erfüllen. Im eingefahrenen Zustand (Z1), ist die Luft aus allen Pneus evakuiert, um so einen möglichst kleinen Raum einzunehmen. Im ausgefahrenen Zustand (Z2) sind die äußeren Pneus mit Druckluft beaufschlagt und die inneren mit Niederoder gar Unterdruck. Durch die wechselseitige Wirkung entsteht zwischen den Rahmen bzw. Rippen eine Spannung, die damit die gesamte Konstruktion versteift. Die dabei maximale Längenänderung beträgt etwa das 10 - 15-fache der Ausgangslänge. Diese kann durch Drucksteuerung um bis zu ca. 30% verkürzt werden. Die gesamte Konstruktion kann über einen Rechner von einer Person bedient werden. Während des Befüllens, bzw. Entleeren der Pneus mit Luft wird ein vorher in den Rechner eingegebener Ausfahrweg beschrieben.

Je nach Geländebeschaffenhelt sind die Augagepunkte der Querschnittsrahmen modular austauschbar, und zwar entweder Rollen bzw. Reifen oder Stützen an deren Unterseite Sensoren angebracht sind. Die Sensoren geben Ihre Signale an den Steuerungsrechner weiter um eine optimale Anpassung an die Geländebeschaffenheiten zu garantieren. Während der Entfaltung des Ganges bzw. dessen Segmenten wird gleichzeitig ein Laufboden mechanisch ausgeklappt, der sich den Winkeländerungen zwischen den Querschnittsrahmen anpasst. Der Gang wird zweckmäßigerweise wellenförmig entfaltet. Erst in der Entspannungsphase der inneren Druckluftschläuche kommen üblicherweise die inneren Querschnittsrahmen auf den Boden zu stehen. Durch den besonderen Entfaltungsprozess ist zusätzlich noch die Möglichkeit gegeben, dass sich der Gang komplett fortbewegen kann, nur durch wechselweise Druckbeaufschlagung.

Ausführungsbeispiele der Erfindung sind anhand einer Zeichnung näher erläutert, In der zeigt:
- Fig. 1: einen Querschnittsrahmen In der Frontansicht,
- Fig. 2: den Querschnittsrahmen nach Fig. 1 in einer Schnittansicht.
- Fig. 3: einen Profilquerschnitt des Querschnittrahmens in gegenüber Fig. 2 vergrößerter Darstellung.
- Fig. 4: den Querschnittsrahmen nach Fig. 1 mit daran befestigten umlaufenden äußeren Druckluftschlauch, axialen inneren Druckluftschläuche und im Rahmen angeordnetem, hochgeklapptem begehbarem Boden,
- Fig. 5: den Querschnittsrahmen nach Fig. 4 in einer Schnittansicht.
- Fig. 6: einen gegenüber Fig. 4 abgewandelten Querschnittsrahmen,
- Fig. 7: eine Querschnittsdarstellung eines Segments mit aufgeblasenen Pneus,
- Fig. 8: ein Detail der Befestigung der äußeren Druckluftschläuche an einem Querschnittsrahmen in gegenüber Fig. 7 vergrößerter Darstellung,
- Fig. 9: eine Unteransicht auf unter einem Winkel zueinander stehenden Bodenplatten des begehbaren Bodens,
- Fig. 10: eine Unteranslcht auf parallel zueinander angeordneten Bodenplatten,
- Fig. 11: einen Querschnitt durch die Bodenplatten nach Fig. 10.
- Fig. 12: eine Fig. 11 vergleichbare Darstellung teilwelse hochgeklappter Bodenplatten,
- Fig. 13: einen Verbindungsgang aus einer größeren Anzahl von Segmenten, deren Mittellinie einen offenen Kreisbogen beschreibt,
- Fig. 14: einen Verbindungsgang aus mehreren Segmenten, dessen einer Teil nach links und dessen anderer Teil nach rechts gekrümmt ist,
- Fig. 15: einen Verbindungsgang aus mehreren Segmenten, der zwei Gebäude geradlinig miteinander verbindet,
- Fig. 16: einen Verbindungsgang aus mehreren Segmenten, der sich auf dem Boden abstützt und im mittleren Teil eine Rampe von einem niedrigeren zu einem höheren Niveau aufweist,
- Fig. 17 bis 28: mögliche einzelne Phasen des Ausfahrens eines Verbindungsgangs aus einer eingefahrenen in eine ausgefahrene Stellung, wie sie in Fig. 15 dargestellt ist.

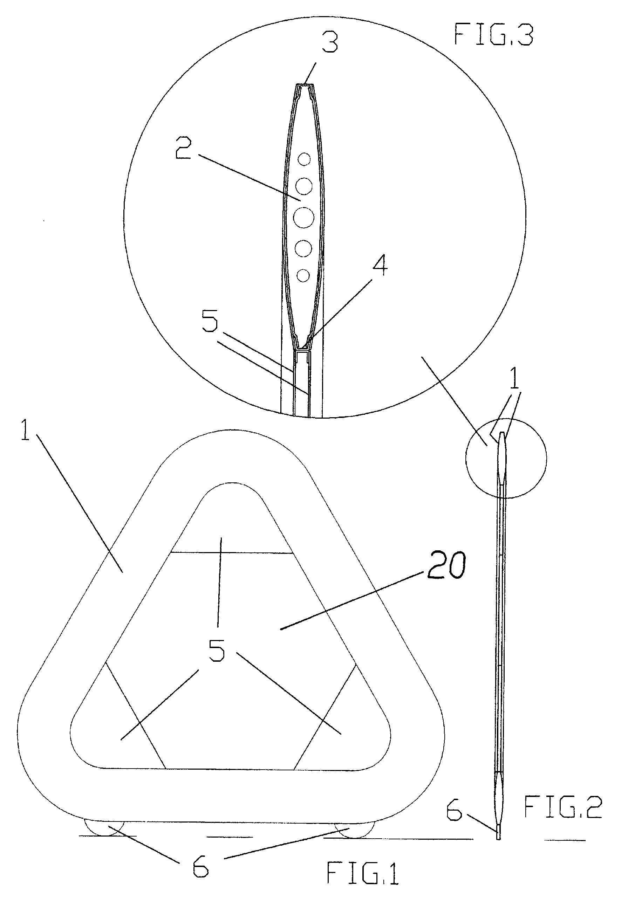

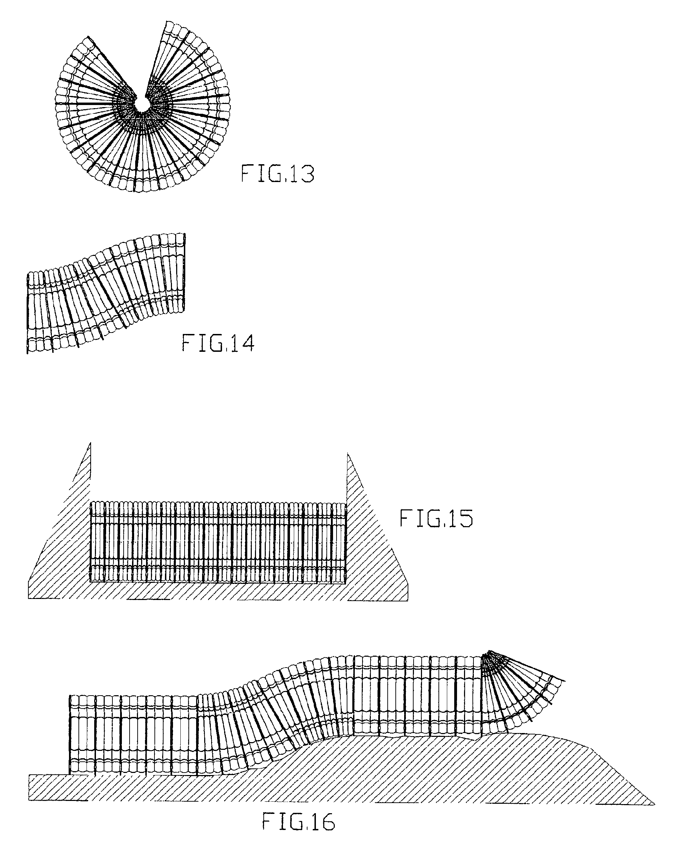

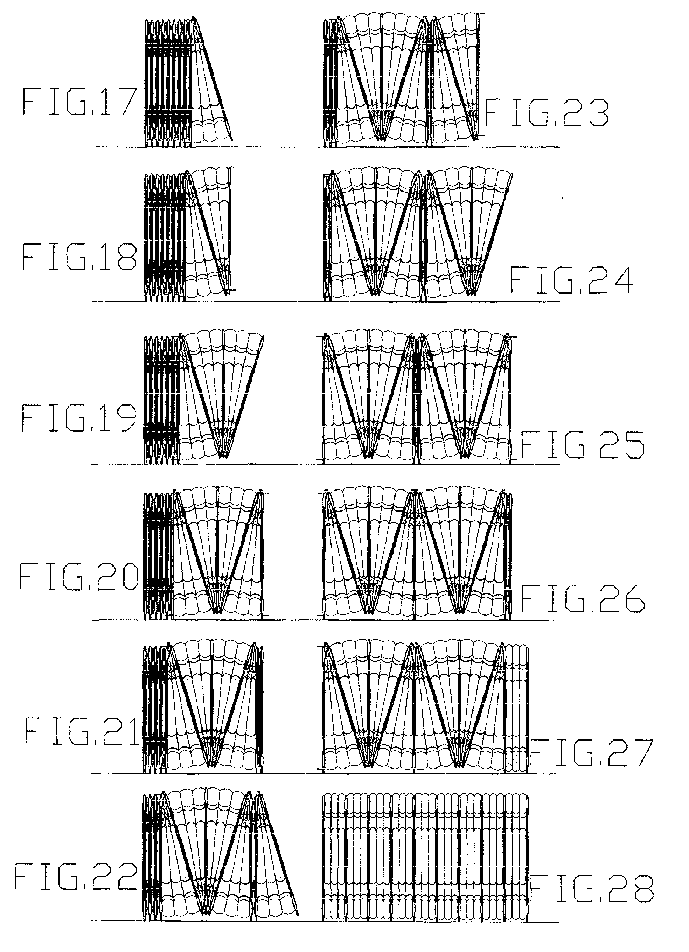

In den Zeichnungen sind der Aufbau aus den einzelnen Elementen in den Fig.1 bis Fig.12, Anwendungsbeispiele in den Fig. 13 bis Fig. 16 und ist der Entfaltungsprozess oder Ausfahrvorgang in den Fig. 17 bis Fig.28 dargestellt.

Ein rippenförmiger Querschnittsrahmen 1 als gleichschenkliges Dreieck mit Durchgangsöffnung 20 ist in Fig. 1 in der Vorderansicht und in Fig. 2 im Querschnitt dargestellt. Er besteht aus gebogenen Aluminiumblechen oder alternativ aus Glasfaserteilen auf der Vorder- und Rückseite, die mit Querrippen 2, sh. Fig. 3, senkrecht zur Außenkante und mit Profilen 3 und 4 vernietet sind. In den drei Ecken sind Versteifungsbleche 5 vorgesehen, die z.B. angenietet sind. Reifen bzw. Räder sind axial zur Gangausbreitung befestigt, alternativ werden Stützfüße 6 entweder angeschraubt oder angenietet, die mit Sensoren ausgerüstet sind, welche Signale an die Steuerungseinheit senden sobald sie den Untergrund berühren.

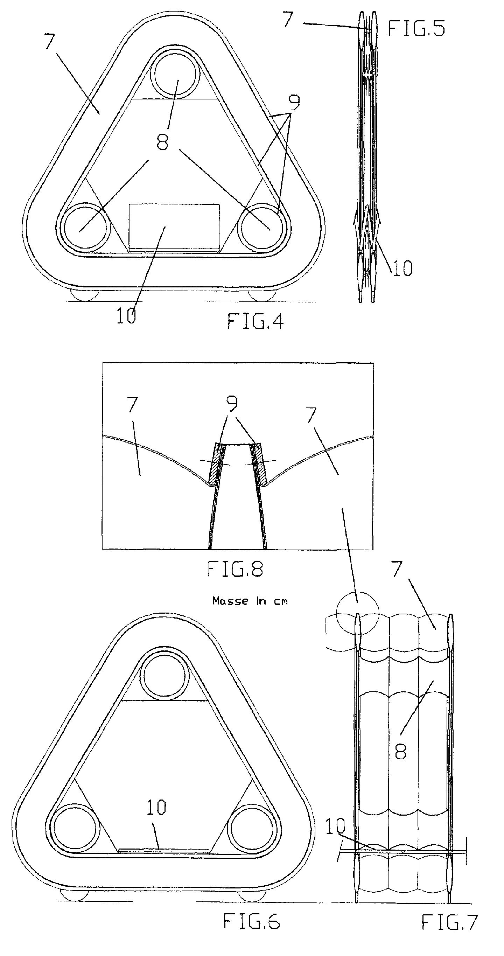

Fig.4 zeigt die Vorderansicht des rippenförmigen Querschnittsrahmen, Fig.5 den Schnitt, in eingefahrenem Zustand mit einem äußeren Druckluftschlauch 7, drei innere Druckluftschläuche 8 und die Befestigungsprofile 9, die jeden Pneu komplett umschließen. Ein begehbarer Boden 10 aus Bodenplatten ist hochgeklappt.

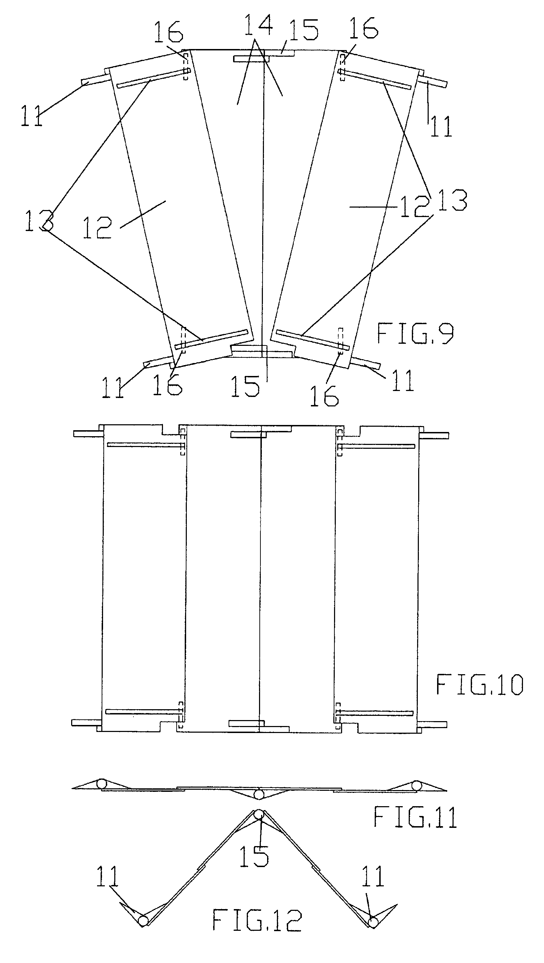

Fig.6 und Fig.7 zeigen die Druckluftschläuche in ausgefahrenem Zustand. Der Boden 10 ist ausgeklappt. Nach Fig.8 werden die Druckluftschläuche an dem rippenförmigen Querschnittsrahmen mit Aluminiumprofilen 9 befestigt. Die Unteransicht des Bodens 10 zeigt Fig.9 mit einer Winkelstellung von jeweils zwei Platten 12 und 14. Die beiden direkt an dem Querschnittsrahmen durch Scharniere 11 angeschlossenen äußeren Bodenplatten 12 besitzen je zwei Längsfugen 13. Die beiden mittleren Bodenplatten 14 sind durch Scharniere 15 miteinander verbunden. Die mittleren Bodenplatten 14 haben je zwei Querfugen 16 über die sie mit Gleitlagern an die Längsfugen der beiden äußeren Bodenplatten 12 verbunden sind.
Die Bodenplatten in ausgeklappter Stellung zeigt Fig. 10.

Fig.11 ist ein Schnitt durch den aufgeklappten Boden während Fig. 12 einen Schnitt durch den zu 90° zusammengeklappten Boden darstellt.

Eine Ansicht von oben auf den einen Kreisbogen beschreibenden Verbindungsgang zeigt Fig. 13. Fig. 14 zeigt eine Ansicht von oben auf den Verbindungsgang bei zweifachem Richtungswechsel. Eine Seitenansicht des Verbindungsganges und eine Darstellung der Verbindung zweier Gebäude stellt Fig. 15 dar. Die Anpassungsfähigkeit der Gestalt des Verbindungsganges an das Gelände ergibt sich aus Fig. 16.

Die Fig.17 bis Fig. 27 zeigen den Aufbau von neun gekoppelten Segmenten in der Entfaltungsphase und Fig.28 in der Entspannungsphase.

In einem ersten Schritt werden die Ventile der beiden unteren inneren Druckluftschläuche geöffnet, aus dem oberen inneren Druckluftschlauch wird Luft evakuiert und der äußere Druckluftschlauch mit Luft befüllt, s. Fig. 17. Dadurch beschreibt der erste rippenförmische Querschnittsrahmen einen Bogen. Im zweiten Schritt wird das zweite Segment, wie das erste Segment mit Luft beschickt. Gleichzeitig wird im ersten Segment aus den beiden unteren inneren Druckluftschläuchen die Luft evakuiert und in den oberen inneren Druckluftschlauch, abhängig von den unteren Schläuchen, Luft eingelassen, s. Fig. 18. Nachdem die beiden nächsten Segmente diesen Prozess durchlaufen haben, s. Fig. 19 und Fig.20 kommt die erste Rippe auf den Untergrund zu stehen. In Fig.21 ist aus dem ersten Segment die Luft aus allen Druckluftschläuchen evakuiert. Es beginnt derselbe Ablauf wie bei Fig. 17, wobei immer eine Segment von hinten nachrückt, s. Fig.22 bis Fig.27.

Ist die entgültige Position erreicht, so setzt die Entspannungsphase ein und die übrigen Rippen setzen auf dem Untergrund auf, s. Fig.28.

Der dreieckige Querschnitt ist nur eine mögliche Form, ebenso kann die Anzahl der Druckluftschläuche zwischen zwei Rippen variieren . Der äußere geschlossene Druckluftschlauch, hier als "äußerer Druckluftschlauch" bezeichnet, kann seine Position auch mit den hier als "innere Druckluftschläuche" bezeichneten Druckluftschläuchen tauschen.

Der bewegliche Schlauchgang, der sich durch Luftdruck entfaltet und jeden vorgegebenen Weg in horizontaler und vertikaler Ebene beschreiben kann, eignet sich unter anderem auch zum Einsatz in verseuchter Atmosphäre, z.B. in einem rauchvergasten Raum. Vorteilhaft ist es, dass das Ende des Schlauchgangs durch Steuerung der Ventile bis zum Einsatzort bewegt werden kann, worauf die Einsatzleute durch den Schlauchgang über einen während des Ausfahrens ausklappbaren Boden vorrücken können.

## Patentansprüche

**1.** Geschlossener, in seiner Länge veränderbarer begehbarer Verbindungsgang aus miteinander verbundenen Segmenten,
**dadurch gekennzeichnet,**
**dass** die Segmente wenigsten einen rippenförmigen, die Querschnittsform bestimmenden formstabilen Querschnittsrahmen (1) mit einer Durchgangsöffnung (20) aufweisen,
**dass** mit jedem Querschnittsrahmen (1) auf der einen Seite ein umlaufender geschlossener gesteuert aufblasbarer äußerer Druckluftschlauch (7) verbunden ist,
**dass** mit jedem Querschnittsrahmen (1) auf der einen Seite innerhalb des äußeren Druckluftschlauchs (7) wenigstens drei sich in Segmentlängsrichtung erstreckende schlauchförmige, einzeln gesteuert aufblasbare und dabei in ihrer Längserstreckung veränderbare innere Druckluftschläuche (8) verbunden sind.

**2.** Begehbarer Verbindungsgang nach Anspruch 1, **dadurch gekennzeichnet, dass** der Querschnittsrahmen (1) eine sechseckige Durchgangsöffnung (20) in Form eines gleichschenkeligen Dreiecks mit abgerundeten Ecken umrahmt.

**3.** Begehbarer Verbindungsgang nach Anspruch 1 und 2, **dadurch gekennzeichnet, dass** der äußere Druckluftschlauch (7) aus mindestens drei miteinander verbundenen Kammern besteht, zwischen denen ein Luftaustausch ermöglicht ist, und jede der Kammern einen annähernd rechteckigen Querschnitt aufweist.

**4.** Begehbarer Verbindungsgang nach Anspruch 1 bis 3, **dadurch gekennzeichnet, dass** die inneren Druckluftschläuche (8) aus mindestens drei miteinander verbundenen Kammern bestehen, zwischen denen ein Luftaustausch ermöglicht ist, und jede der Kammern einen kreisförmigen Querschnitt aufweist.
Begehbarer Verbindungsgang nach Anspruch 4, **dadurch gekennzeichnet, dass** jeder innere Druckluftschlauch (8) zwischen den Kammern Versteifungsringe aufweist.

**6.** Begehbarer Verbindungsgang nach einem der vorhergehenden Ansprüche 1 bis 5, **dadurch gekennzeichnet, dass** die äußeren Druckluftschläuche (7) und die inneren Druckluftschläuche (8) über Druckleitungen an mindestens einen Überdruck-/Unterdruck-Kompressor angeschlossen sind.

**7.** Begehbarer Verbindungsgang nach Anspruch 7, **dadurch gekennzeichnet, dass** der Druck in den äußeren Druckluftschläuchen (7) und den inneren Druckluftschläuchen (8) mittels elektrisch regelbarer Ventile steuerbar wird.

**8.** Begehbarer Verbindungsgang nach Anspruch 6, oder 7, **dadurch gekennzeichnet, dass** der Druck in den äußeren Druckluftschläuchen (7) und den inneren Druckluftschläuchen (8) mittels der elektrisch regelbaren Ventile von einem diese ansteuemden Steuerrechner steuerbar ist, , an den Druckgeber angeschlossen sind, die den Druck in den Druckluftschläuchen (7, 8) ermitteln.

**9.** Begehbarer Verbindungsgang nach einem der Ansprüche 1 bis 8, **dadurch gekennzeichnet, dass** an jedem Querschnittsrahmen je zwei Stützelemente (6) zur Abstützung auf dem den Gang tragenden Untergrund angebracht sind, insb. Rollen, Reifen oder mit Sensoren versehene Stützen.

**10.** Begehbarer Verbindungsgang nach einem der Ansprüche 1 bis 9, **dadurch gekennzeichnet, dass** innerhalb der Segmente ein begehbarer Boden (10) vorgesehen ist, der sich beim axialen Ausfahren des Verbindungsgangs gleichzeitig streckt.
